# EUROPÄISCHE PATENTSCHRIFT

(11) **EP 0 966 857 B1**
(45) Veröffentlichungstag und Bekanntmachung des Hinweises auf die Patenterteilung: **11.08.2004**
(21) Anmeldenummer: 97947704.9
(22) Anmeldetag: 23.10.1997
(51) Int. Cl.: H04Q 7/32

(54) **TELEKOMMUNIKATIONSEINHEIT ZUM DRAHTLOSEN AUSTAUSCH VON DATEN**
TELECOMMUNICATION UNIT FOR THE WIRELESS EXCHANGE OF DATA
UNITE DE TELECOMMUNICATIONS D'ECHANGE SANS FIL DE DONNEES

(30) Priorität: 26.10.1996 DE 19644562
(43) Veröffentlichungstag der Anmeldung: 29.12.1999
(73) Patentinhaber: ROBERT BOSCH GMBH, 70442 Stuttgart (DE)
(72) Erfinder: KÄSSER, Jürgen, D-31199 Diekholzen (DE)
(86) Internationale Anmeldenummer: PCT/DE1997/002464
(87) Internationale Veröffentlichungsnummer: WO 1998/019486

(56) Entgegenhaltungen:
- EP-A- 0 482 503
- EP-A- 0 509 510
- EP-A- 0 695 102
- GB-A- 2 241 850
- GB-A- 2 264 613
- US-A- 4 363 935
- US-A- 4 873 711
- US-A- 5 490 284

## Beschreibung

### Stand der Technik

Die Erfindung geht von einer Telekommunikationseinheit nach dem Oberbegriff des unabhängigen Anspruchs 1 aus.

Aus der EP 0 290 725 B1 ist ein Verfahren zum Bestimmen des ungefähren Aufenthaltsortes einer mobilen Funkstation in einem zellularen Funktelefonnetz mit mobilen Funkstationen und mit einer Feststation je Funkzelle bekannt, bei dem zwischen der mobilen Funkstation und einer Feststation Ortsinformationen enthaltende Datentelegramme ausgetauscht werden.

Aus der EP 0 482 503 A2 ist ein mobiles Funkkommunikationssystem bekannt, das eine mobile Basisstation und portable Geräte als Mobilstationen umfaßt. Die mobile Basisstation umfaßt eine erste Sende-/Empfangseinheit und eine zweite Sende-/Empfangseinheit. Die erste Sende-/Empfangseinheit wird für Funkkommunikation mit einer festen Basisstation über einen ersten Funkkanal verwendet. Die zweite Sende-/Empfangseinheit wird für Funkkommunikation mit seinem portablen Gerät über einen zweiten Funkkanal verwendet. Ein schnurgebundener Handapparat ist schaltbar an die erste Sende-/Empfangseinheit anschließbar.

Aus der US 5,490,284 ist es bekannt, eine Funkverbindung von einem tragbaren Terminal über eine transportable Erdstation zu einer festen Basisstation aufzubauen.

Aus der US 4,873,711 ist ein mobiler Sendeempfänger bekannt, der in einem Fahrzeug montiert ist. Der mobile Sendeempfänger kommuniziert über eine zweite Mobileinheit mit einer portablen Einheit kurzer Reichweite. Die portable Einheit kann entweder ein schnurloses Mikrofon oder ein weiterer Sendeempfänger sein. Die portable Einheit ermöglicht es einem entfernt positionierten Benutzer, Meldungen an eine Basisstation zu übertragen.

Aus der GB 2 241 850 A ist eine Kommunikationsverbindung zwischen einer ersten und einer dritten Station über eine dazwischenliegende zweite Station bekannt. Jede Übertragung von der ersten zur zweiten, von der zweiten zur ersten, von der zweiten zur dritten und von der dritten zur zweiten Station findet in einem unterschiedlichen Zeitschlitz statt. Dabei umfaßt das System ein zellulares Funktelefon in einem Fahrzeug mit einem schnurlosen portablen Handapparat, der auch außerhalb des Fahrzeugs verwendet werden kann. Die Übertragungsfrequenzen unterscheiden sich ebenfalls.

### Vorteile der Erfindung

Die erfindungsgemäße Telekommunikationseinheit mit den Merkmalen des Hauptanspruchs hat den Vorteil, daß ihre Funktionalität durch Verbindung einer bestehenden Mobilfunkeinrichtung mit einer Feststation erweitert wird, so daß die Telekommunikationseinheit in verschiedenen Funknetzen operabel ist somit als Bindeglied für Telekommunikationsanwendungen über verschiedene Netze verwendbar ist.

Vorteilhaft ist auch, daß die Feststation eine Funkzelle in dem weiteren Funknetz aufspannt. Besonders beim Einsatz der Telekommunikationseinheit in einem Fahrzeug ist auf diese Weise eine Erhöhung des Bedienkomforts, der Verkehrssicherheit und der Reichweite bei Verwendung eines in dieser Funkzelle operablen schnurlosen Handgerätes möglich.

Durch die in den Unteransprüchen aufgeführten Maßnahmen sind vorteilhafte Weiterbildungen und Verbesserungen der im Hauptanspruch angegebenen Telekommunikationseinheit möglich.

Besonders vorteilhaft ist eine digitale Übertragung der Nutzdaten zwischen der Feststation und der Mobilfunkeinrichtung. Auf diese Weise ist zwischen der Mobilfunkeinrichtung und der Feststation lediglich eine Formatumwandlung zur Anpassung der Datenformate erforderlich. Eine solche Anpassung der Datenformate ist zudem einfach zu realisieren und erfordert wenig Aufwand, Platz und Kosten.

Besonders vorteilhaft ist auch eine Schaltvorrichtung, mit der die Feststation oder ein Lautsprecher und ein Freisprechmikrofon wahlweise mit der Mobilfunkeinrichtung verbindbar sind und ein Schaltvorgang der Schaltvorrichtung bei Betätigung eines Gabelumschaltkontaktes einer Auflage für einen Handapparat erfolgt. Auf diese Weise kann der Benutzer der Telekommunikationseinheit auf einfachste Weise wählen, ob er über die Freisprecheinrichtung oder den Handapparat telefonieren möchte. Durch Entnahme des Handapparates aus der Auflage wird der Gabelumschaltkontakt automatisch betätigt und auf den Handapparat umgeschaltet.

Ein weiterer Vorteil besteht darin, die Telekommunikationseinheit in einen Rundfunkempfänger, vorzugsweise ein Autoradio, zu integrieren. Auf diese Weise wird Platz eingespart sowie Übersichtlichkeit und Bedienkomfort erhöht. Durch die Integration in einen Rundfunkempfänger lassen sich auch Material und Kosten sparen.

### Zeichnung

Ein Ausführungsbeispiel der Erfindung ist in der Zeichnung dargestellt und in der nachfolgenden Beschreibung näher erläutert. Es zeigen
Figur 1 eine Telekommunikationseinheit, die mit einer Basisstation und einer mobilen Station Daten austauscht und
Figur 2 das Blockschaltbild einer in die Telekommunikationseinheit integrierten Feststation.

### Beschreibung des Ausführungsbeispiels

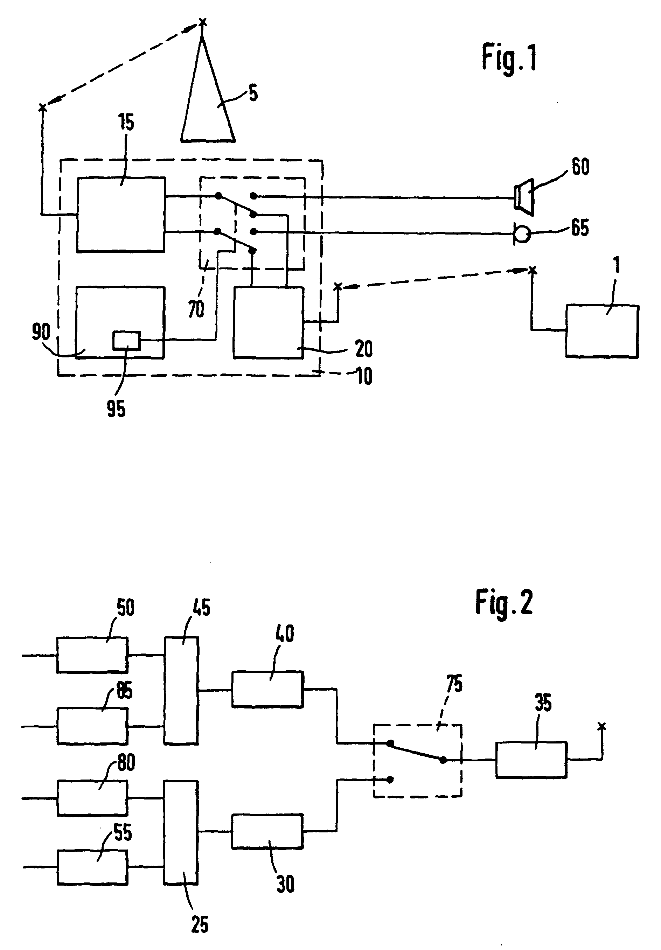

In Figur 1 kennzeichnet 5 eine Basisstation eines Mobilfunknetzes und 1 eine als schnurloser Handapparat eines Autotelefons ausgebildete erste mobile Station. Weiterhin ist eine als Telekommunikationseinheit ausgebildete zweite mobile Station 10 vorgesehen, die in einen als Autoradio ausgebildeten Rundfunkempfänger integriert ist. Die Telekommunikationseinheit 10 umfaßt eine Mobilfunkeinrichtung 15 und eine Feststation 20. An die Mobilfunkeinrichtung 15 ist über eine Schaltvorrichtung 70 ein Lautsprecher 60 und ein Freisprechmikrofon 65 anschließbar. Alternativ ist über die Schaltvorrichtung 70 die Feststation 20 mit der Mobilfunkeinrichtung 15 verbindbar. Die Telekommunikationseinheit 10 weist außerdem eine Auflage 90 zur Ablage des Handapparates 1 auf. Die Auflage 90 weist einen Gabelumschaltkontakt 95 auf, der mit der Schaltvorrichtung 70 verbunden ist. Zwischen der Basisstation 5 und der Mobilfunkeinrichtung 15 sowie zwischen dem Handapparat 1 und der Feststation 20 werden Daten mittels Funksignalen ausgetauscht. Dieser Datenaustausch wird in Figur 1 jeweils durch einen gestrichelten Doppelpfeil dargestellt.

Figur 2 zeigt das Blockschaltbild der Feststation 20. Dabei kennzeichnet 35 einen Sende-/Empfänger, der über einen Schalter 75 alternativ mit einem Demodulator 40 oder einem Modulator 30 verbindbar ist. An den Modulator 30 ist ein erster Signalgenerator 25 angeschlossen. Mit dem ersten Signalgenerator 25 ist ein Analog-Digital-Wandler 55 und ein zweiter Signalgenerator 80 verbunden. Der Demodulator 40 ist mit einem Signalteiler 45 verbunden, an den ein Umsetzer 50 und ein Digital-Analog-Wandler 85 angeschlossen ist. Der Umsetzer 50, der Digital-Analog-Wandler 85, und der Analog-Digital-Wandler 55 sind jeweils über die Schaltvorrichtung 70 gemäß Figur 1 an die Mobilfunkeinrichtung 15 anschließbar. Die schematisch dargestellte Verbindung der Mobilfunkeinrichtung 15 mit der Feststation 20 über zwei Leitungen gemäß Figur 1 umfaßt gemäß Figur 2 drei Datenleitungen.

Zwischen der Mobilfunkeinrichtung 15 und der Basisstation 5 werden Funksignale in einem Mobilfunknetz nach GSM-Standard ausgetauscht. Die Basisstation 5 spannt im Mobilfunknetz eine Funkzelle auf, in der sich die Telekommunikationseinheit 10 befindet. Bei in die Auflage 90 abgelegtem Handgerät 1 wird der Gabelumschaltkontakt 95 niedergedrückt, so daß die Schaltvorrichtung 70 eine erste Grundstellung einnimmt, in der der Lautsprecher 60 und das Freisprechmikrofon 65 mit der Mobilfunkeinrichtung 15 verbunden sind. Die Kommunikation des Benutzers der Telekommunikationseinheit 10 mit der Basisstation 5 findet dann unter Verwendung der aus Lautsprecher 60 und Freisprechmikrofon 65 gebildeten Freisprecheinrichtung ausschließlich über das Mobilfunknetz statt. Durch Entnahme des Handapparates 1 aus der Auflage 90 wird der Gabelumschaltkontakt 95 betätigt, so daß ein Schaltvorgang der Schaltvorrichtung 70 erfolgt. Dabei wird die Mobilfunkeinrichtung 15 vom Lautsprecher 60 und vom Freisprechmikrofon 65 getrennt und mit der Feststation 20 verbunden. Zwischen der Feststation 20 und dem Handapparat 1 werden dann Daten in einem von dem Mobilfunknetz verschiedenen Funknetz für Schnurlostelefonie, beispielsweise nach dem DECT-,dem CT2- oder dem PHS-Standard ausgetauscht. Die Feststation 20 hat die Aufgabe, die Nutzund Steuerdaten der über die beiden verschiedenen Funknetze übertragenen Funksignale so umzusetzen, daß zwischen dem Handapparat 1 und der Basisstation 5 eine Datenverbindung aufgebaut werden kann. Möchte der Benutzer der Telekommunikationseinheit 10 wieder über die aus Lautsprecher 60 und Freisprechmikrofon 65 gebildete Freisprecheinrichtung mit der Basisstation 5 kommunizieren, so muß er lediglich den Handapparat 1 wieder in der Auflage 90 ablegen, wodurch der Gabelumschaltkontakt 95 betätigt wird und einen erneuten Schaltvorgang der Schaltvorrichtung 70 bewirkt. Dadurch werden der Lautsprecher 60 und das Freisprechmikrofon 65 wieder mit der Mobilfunkstation 15 verbunden und die Feststation 20 von der Mobilfunkstation 15 getrennt. Mit der beschriebenen Verwendung verschiedener Funknetze für die Übertragung von Daten zwischen der Basisstation 5 und der Mobilfunkeinrichtung 15 und die Übertragung von Daten zwischen der Feststation 20 und dem Handapparat 1 sind auch die für die Übertragung verwendeten Frequenzbereiche unterschiedlich. So werden die Funksignale zwischen dem Handapparat 1 und der Feststation 20 in einem ersten Frequenzbereich und die Funksignale zwischen der Basisstation 5 und der Mobilfunkeinrichtung 15 in einem von dem ersten Frequenzbereich verschiedenen zweiten Frequenzbereich ausgetauscht.

Zwischen der Basisstation 5 und der Mobilfunkeinrichtung 15 werden digitale Funksignale ausgetauscht. Die von der Basisstation 5 abgestrahlten digitalen Funksignale werden von der Mobilfunkeinrichtung 15 empfangen und in analoge Signale umgewandelt. Bei in die Auflage 90 abgelegtem Handapparat 1 werden die analogen Signale dem Lautsprecher 60 zur akustischen Wiedergabe zugeführt. Umgekehrt werden in das Freisprechmikrofon 65 eingegebene Ton- und/oder Sprachsignale bei aufgelegtem Handapparat 1 analog an die Mobilfunkeinrichtung 15 weitergeleitet, in der Mobilfunkeinrichtung 15 digitalisiert und als digitale Funksignale an die Basisstation 5 abgestrahlt. Bei abgenommenem Handapparat 1 werden zwischen der Mobilfunkeinrichtung 15 und der Feststation 20 ebenfalls analoge Signale ausgetauscht. Da der Austausch von Funksignalen zwischen dem Handapparat 1 und der Feststation 20 ebenfalls digital ist, müssen die von der Mobilfunkeinrichtung 15 kommenden analogen Signale in der Feststation 20 wieder digitalisiert und die vom Handapparat 1 in der Feststation 20 empfangenen digitalen Funksignale zur Weiterleitung an die Mobilfunkeinrichtung 15 in analoge Signale umgewandelt werden.

Die Feststation 20 spannt eine Funkzelle in dem Funknetz für Schnurlostelefonie auf, in dem sich der Handapparat 1 befindet.

Im folgenden wird die Funktionsweise der Feststation 20 bei durch die Schaltvorrichtung 70 bewirkter Verbindung mit der Mobilfunkeinrichtung 15 zur Umwandlung zwischen den Funksignalen des Mobilfunknetzes und den Funksignalen des Funknetzes für Schnurlostelefonie beschrieben.

Der Sende-/Empfänger 35 empfängt von dem Handapparat 1 Funksignale, die Nutzdaten und Steuerdaten enthalten. Die Steuerdaten enthalten Informationen darüber, welcher Teilnehmer für welche Art von Verbindung gewünscht wird. Die Nutzdaten enthalten die zu übertragenden Nutzinformationen. Im Empfangsfall ist der Schalter 75 so geschaltet, daß der Sende-/Empfänger 35 mit dem Demodulator 40 verbunden ist. Im Demodulator 40 findet eine Umsetzung des Frequenzbandes der empfangenen Signale in ein Basisband statt. Im Signalteiler 45 werden die Nutz- und die Steuerdaten voneinander getrennt. Die Nutzdaten werden anschließend vom Digital-Analog-Wandler 85 in analoge Signale zur Weiterleitung an die Mobilfunkeinrichtung 15 umgewandelt. Die Steuerdaten werden im Umsetzer 50 in entsprechende Bedienbefehle für die Mobilfunkeinrichtung 15 umgewandelt und an diese weitergeleitet. Auf diese Weise kann die Mobilfunkeinrichtung 15 die gewünschte Verbindung zum gewünschten Teilnehmer über die Basisstation 5 mittels des Mobilfunknetzes aufbauen und über diese Verbindung die Nutzdaten übertragen. Dabei wird der gewünschte Teilnehmer und die gewünschte Art der Verbindung vom Bediener des Handapparates 1 am Handapparat 1 gewählt und entsprechende Steuerdaten an die Feststation 20 abgestrahlt. Werden umgekehrt in der Mobilfunkeinrichtung 15 Funksignale von der Basisstation 5 empfangen, so werden die darin enthaltenen Nutzdaten analog an die Feststation 20 weitergeleitet. Mittels des Analog-Digital-Wandlers 55 werden die analogen Nutzdatensignale digitalisiert. Zur Adressierung und Ansteuerung des Handapparates 1 werden im zweiten Signalgenerator 80 entsprechende Steuerdaten generiert und zusammen mit den Nutzdaten im ersten Signalgenerator 25 in Funksignale umgewandelt. Die Funksignale werden im Modulator 30 in das zur Übertragung im Funknetz für die Schnurlostelefonie vorgesehene Frequenzband umgesetzt. Für den Sendefall ist der Schalter 75 so geschaltet, daß der Sende-/Empfänger 35 mit dem Modulator 30 verbunden ist. Der Sende-/Empfänger 35 strahlt dann die im Modulator 30 umgesetzten Funksignale an den Handapparat 1 ab.

Eine Einsparung des Analog-Digital-Wandlers 55 und des Digital-Analog-Wandlers 85 ergibt sich, wenn zwischen der Mobilfunkeinrichtung 15 und der Feststation 20 anstelle von analogen Signalen digitale Signale übertragen werden. Entsprechende wandler können dann auch in der Mobilfunkeinrichtung 15 entfallen. Damit dem Lautsprecher 60 jedoch analoge Signale zuführbar sind, muß in diesem Fall zwischen die Schaltvorrichtung 70 und den Lautsprecher 60 ein Digital-Analog-Wandler eingefügt werden. Zur Digitalisierung der über das Freisprechmikrofon 65 eingebbaren Ton- und/oder Sprachsignale muß in entsprechender Weise zwischen die Schaltvorrichtung 70 und das Freisprechmikrofon 65 ein Analog-Digital-Wandler eingefügt werden. Für die digitale Übertragung in den beiden Funknetzen werden unterschiedliche Datenformate verwendet. Daher muß bei digitaler Übertragung zwischen der Mobilfunkeinrichtung 15 und der Feststation 20 in der Feststation 20 für jede Übertragungsrichtung eine Formatumwandlung bzw. -anpassung durchgeführt werden. In diesem Fall kennzeichnet das Bezugszeichen 55 in Figur 2 einen ersten Formatumwandler, der das Mobilfunkdatenformat in das entsprechende Datenformat für die schnurlose Telefonie umwandelt. Das Bezugszeichen 85 kennzeichnet dann einen zweiten Formatumwandler, der das Datenformat für die Schnurlostelefonie in das Mobilfunkdatenformat umwandelt.

Bezüglich der vom Bediener des Handapparates 1 zu wählenden Art der Verbindung gibt es neben der Sprachübertragung über das in den Handapparat 1 eingebaute Mikrofon und den ebenfalls dort eingebauten Lautsprecher auch die Möglichkeit andere Daten zu übertragen. So kann der Handapparat 1 mit einer Schnittstelle zum Anschluß beispielsweise eines Faxgerätes oder eines Lap-Tops ausgestattet sein. Alternativ dazu können aber auch andere Teilnehmerendgeräte wie beispielsweise Faxgeräte oder Lap-Tops mit einer Luftschnittstelle zur Übertragung von Funksignalen in einem Funknetz für Schnurlostelefonie ausgestattet sein. Diese Geräte würden dann anstelle des Handapparates die erste mobile Station 1 darstellen.

Die Tatsache, daß die Feststation 20 nur mit einem oder wenigen gegebenenfalls gekennzeichneten Handapparaten 1 kommunizieren kann, ermöglicht eine Ausführung der Feststation 20 ohne allgemeine Zugangsfähigkeit, d.h. es ist keine Schnittstelle erforderlich, über die üblicherweise beliebige Handapparate mit der Feststation 20 kommunizieren können.

Verläßt der Benutzer des Handapparates 1 das Fahrzeug, so kann er den Handapparat 1 mitnehmen und mit anderen Feststationen beispielsweise zu Hause oder in öffentlichen Einrichtungen wie Flughäfen, Bahnhöfen oder dergleichen kommunizieren. Auf diese Weise kann der Benutzer über den Handapparat 1 sowohl über das Mobilfunknetz als auch über das Funknetz für Schnurlostelefonie kommunizieren.

Weiterhin besteht die Möglichkeit, in der Auflage 90 ein Ladegerät vorzusehen, um somit eine Auflademöglichkeit für einen Akkumulator des Handapparates 1 in aufgelegtem Zustand zu schaffen.

## Patentansprüche

1. Telekommunikationseinheit (10), vorzugsweise in einem Fahrzeug, mit einer Mobilfunkeinrichtung (15), insbesondere nach dem GSM-Standard, zum Senden und/oder Empfangen von Funksignalen in einem Mobilfunknetz, mit einer Feststation (20), die mit der Mobilfunkeinrichtung (15) verbunden ist, wobei die Feststation (20) eine Funkzelle in einem weiteren von dem Mobilfunknetz verschiedenen Funknetz aufspannt und in der Feststation (20) eine Umwandlung zwischen Funksignalen des Mobilfunknetzes und Funksignalen des weiteren Funknetzes erfolgt, **dadurch gekennzeichnet, daß** wahlweise die Feststation (20) oder ein Lautsprecher (60) und ein Freisprechmikrophon (65) mit der Mobilfunkeinrichtung (15) verbindbar ist.

2. Telekommunikationseinheit (10) nach Anspruch 1, **dadurch gekennzeichnet, daß** die Feststation (20) mindestens einen Signalgenerator (25) zur Erzeugung von Nutz- und Steuerdaten enthaltenden Funksignalen, einen Modulator (30) zur Umsetzung der Funksignale in ein vorgegebenes Frequenzband und einen Sender (35) zur Abstrahlung der Funksignale umfaßt und daß die Erzeugung der Funksignale im Signalgenerator (25) der Feststation (20) von in der Mobilfunkeinrichtung (15) empfangenen und an die Feststation (20) weitergeleiteten Daten abhängt.

3. Telekommunikationseinheit (10) nach Anspruch 1 oder 2, **dadurch gekennzeichnet, daß** die Feststation (20) einen Demodulator (40) zur Demodulation von über einen Empfänger (35) erhaltenen Funksignalen des weiteren Funknetzes, einen Signalteiler (45) zur Aufspaltung von empfangenen Nutz- und Steuerdaten und mindestens einen Umsetzer (50) zur Anpassung und weiterleitung der Nutz- und Steuerdaten an die Mobilfunkeinrichtung (15) umfaßt.

4. Telekommunikationseinheit (10) nach Anspruch 1, 2 oder 3, **dadurch gekennzeichnet, daß** die Feststation (20) digitale Signale abstrahlt und/oder empfängt.

5. Telekommunikationseinheit (10) nach Anspruch 4, **dadurch gekennzeichnet, daß** die Übertragung der Nutzdaten zwischen der Feststation (20) und der Mobilfunkeinrichtung (15) analog ist und daß zwischen der Mobilfunkeinrichtung (15) und der Feststation (20) mindestens ein Analog-Digital-Wandler (55) vorgesehen ist.

6. Telekomunikationseinheit (10) nach Anspruch 4, **dadurch gekennzeichnet, daß** die Übertragung der Nutzdaten zwischen der Feststation (20) und der Mobilfunkeinrichtung (15) digital ist und daß zwischen der Mobilfunkeinrichtung (15) und der Feststation (20) mindestens ein Formatumwandler (55) zur Anpassung der Datenformate vorgesehen ist.

7. Telekommunikationseinheit (10) nach einem der vorherigen Ansprüche, **dadurch gekennzeichnet, daß** eine Auflage (90) für einen Handapparat (1) vorgesehen ist, die einen Gabelumschaltkontakt (95) aufweist, daß eine Schaltvorrichtung (70) vorgesehen ist, die wahlweise die Feststation (20) oder den Lautsprecher (60) und das Freisprechmikrophon (65) mit der Mobilfunkeinrichtung (15) verbindet, und daß ein Schaltvorgang der Schaltvorrichtung (70) bei Betätigung des Gabelumschaltkontaktes (95) erfolgt.

8. Telekommunikationseinheit (10) nach einem der vorherigen Ansprüche, **dadurch gekennzeichnet, daß** die Telekommunikationseinheit (10) in einen Rundfunkempfänger, vorzugsweise ein Autoradio, integriert ist.

## Claims

1. Telecommunications unit (10), preferably in a vehicle, having a mobile radio device (15), in particular according to the GSM standard, for transmitting and/or receiving radio signals in a mobile radio network, having a fixed station (20) which is connected to a mobile radio device (15), the fixed station (20) forming a radio cell in a further radio network which is different from the mobile radio network, and a conversion between radio signals of the mobile radio network and radio signals of the further radio network being carried out in the fixed station (20), **characterized in that** either the fixed station (20) or a loudspeaker (60) and a hand-free microphone (65) can be connected to the mobile radio device (15).

2. Telecommunications unit (10) according to Claim 1, **characterized in that** the fixed station (20) comprises at least one signal generator (25) for generating radio signals containing useful data and control data, a modulator (30) for converting the radio signals into a predefined frequency band, and a transmitter (35) for emitting the radio signals, and **in that** the generation of the radio signals in the signal generator (25) of the fixed station (20) depends on data which has been received in the mobile radio device (15) and passed on to the fixed station (20).

3. Telecommunications unit (10) according to Claim 1 or 2, **characterized in that** the fixed station (20) comprises a demodulator (40) for demodulating radio signals of the further radio network which are received via a receiver (35), a signal divider (45) for dividing received useful data and control data, and at least one converter (50) for adapting the useful data and control data and passing it on to the mobile radio device (15).

4. Telecommunications unit (10) according to Claim 1, 2 or 3, **characterized in that** the fixed station (20) emits and/or receives digital signals.

5. Telecommunications unit (10) according to Claim 4, **characterized in that** the transmission of the useful data between the fixed station (20) and the mobile radio device (15) is analogue, and **in that** at least one analogue/digital converter (55) is provided between the mobile radio device (15) and the fixed station (20).

6. Telecommunications unit (10) according to Claim 4, **characterized in that** the transmission of the useful data between the fixed station (20) and the mobile radio device (15) is digital, and **in that** at least one format converter (55) for adapting the data formats is provided between the mobile radio device (15) and the fixed station (20).

7. Telecommunications unit (10) according to one of the preceding claims, **characterized in that** a support (90) for a handset (1) is provided which has a hook switch contact (95), **in that** a switching device (70) is provided which connects either the fixed station (20) or the loudspeaker (60) and the hands-free microphone (65) to the mobile radio device (15), and **in that** a switching process of the switching device (70) takes place when the hook switch contact (95) is activated.

8. Telecommunications unit (10) according to one of the preceding claims, **characterized in that** the telecommunications unit (10) is integrated into a radio receiver, preferably a car radio.

## Revendications

1. Unité de télécommunication (10), de préférence dans un véhicule, comportant un dispositif de radiocommunication mobile (15), en particulier selon la norme GSM, permettant d'envoyer et/ou de recevoir des signaux radioélectriques dans un réseau de radiocommunication mobile, comportant une station fixe (20) qui, reliée au dispositif de radiocommunication mobile (15), détermine une cellule radio dans un autre réseau de radiocommunication différent du réseau de radiocommunication mobile, et avec dans la station fixe (20) une conversion produite entre les signaux radioélectriques du réseau de radiocommunication mobile et les signaux radioélectriques de l'autre réseau de radiocommunication,
**caractérisée en ce que**
la station fixe (20) ou un haut-parleur (60) et un microphone mains-libres (65) peuvent être reliés sélectivement au dispositif de radiocommunication mobile (15).

2. Unité de télécommunication (10) selon la revendication 1,
**caractérisée en ce que**
la station fixe (20) comprend au moins un générateur de signaux (25) permettant de générer des signaux radioélectriques contenant des données utiles et des données de commande, un modulateur (30) permettant d'appliquer les signaux radioélectriques dans une bande de fréquences prédéterminée et un émetteur (35) permettant de diffuser les signaux radioélectriques, et la génération des signaux radioélectriques dans le générateur de signaux (25) de la station fixe (20) dépend des données reçues dans le dispositif de radiocommunication mobile (15) et transmises à la station fixe (20).

3. Unité de télécommunication (10) selon la revendication 1 ou 2,
**caractérisée en ce que**
la station fixe (20) comprend un démodulateur (40) permettant de démoduler des signaux radioélectriques de l'autre réseau de radiocommunication reçus par le biais d'un récepteur (35), un diviseur de signaux (45) permettant de diviser des données utiles et des données de commande reçues, et au moins un réémetteur (50) permettant d'adapter et de transmettre les données utiles et les données de commande vers le dispositif de radiocommunication mobile (15).

4. Unité de télécommunication (10) selon la revendication 1, 2 ou 3,
**caractérisée en ce que**
la station fixe (20) diffuse et/ou reçoit des signaux numériques.

5. Unité de télécommunication (10) selon la revendication 4,
**caractérisée en ce que**
la transmission des données utiles entre la station fixe (20) et le dispositif de radiocommunication mobile (15) est analogique, et au moins un convertisseur analogique-numérique (55) est prévu entre le dispositif de radiocommunication mobile (15) et la station fixe (20).

6. Unité de télécommunication (10) selon la revendication 4,
**caractérisée en ce que**
la transmission des données utiles entre la station fixe (20) et le dispositif de radiocommunication mobile ( 15) est numérique et **en ce qu'**il est prévu au moins un convertisseur de format (55) entre le dispositif de radiocommunication mobile (15) et la station fixe (20) afin d'adapter le format des données.

7. Unité de télécommunication (10) selon l'une des revendications précédentes,
**caractérisée en ce qu'**
un réceptacle (90) pour un combiné (1) présente un contact d'appui à deux directions (95), un dispositif de commutation (70) relie sélectivement la station fixe (20) ou le haut-parleur (60) et le microphone mains-libres (65) au dispositif de radiocommunication mobile (15), et un processus de commutation du dispositif de commutation (70) est mis en oeuvre lors de l'actionnement du contact d'appui à deux directions (95).

8. Unité de télécommunication (10) selon l'une des revendications précédentes,
**caractérisée en ce que**
l'unité de télécommunication (10) est intégrée dans un poste de radio, de préférence un autoradio.
